# EUROPEAN PATENT APPLICATION

(11) **EP 4 098 094 A2**
(43) Date of publication of application: **07.12.2022**
(21) Application number: 22174750.4
(22) Date of filing: 23.05.2022
(51) Int. Cl.: A01B 69/04, A01M 7/00, G05D 1/00

(54) **AUTOMATIC TRAVELING METHOD, AUTOMATIC TRAVELING SYSTEM, AND AUTOMATIC TRAVELING PROGRAM**

(30) Priority: 31.05.2021 JP 2021091524
(71) Applicant: Yanmar Holdings Co., Ltd., Osaka-shi, Osaka (JP)
(72) Inventor: SUZUKI, Akihiro, Osaka (JP)
(74) Representative: Novagraaf International SA

(57) **Abstract**

[Problem] To provide an automatic traveling method, an automatic traveling system, and an automatic traveling program, by which it is possible to move a work vehicle from a stop location when the work vehicle automatically traveling in a travel region stops automatic travel during a work.

[SOLUTION] An automatic traveling method includes causing a work vehicle 10 to travel in a target route travel mode M1 in which the work vehicle 10 automatically travels according to a target route R previously set, based on positioning information of the work vehicle 10, in a farm field F, switching, if a positioning accuracy of the work vehicle 10 is less than a predetermined accuracy, a travel mode from the target route travel mode M1 to a crop row route travel mode M2 in which the work vehicle 10 travels according to a position of crops V arranged within the farm field F to cause the work vehicle 10 to travel, and causing the work vehicle 10 to travel to an end point of a crop row route R0 set according to the position of the crops V in the crop row route travel mode M2.

## Description

### TECHNICAL FIELD

The present invention relates to an automatic traveling method, an automatic traveling system, and an automatic traveling program, for causing a work vehicle to automatically travel according to a target route in a travel region.

### BACKGROUND ART

There is known a system for causing a work vehicle to automatically travel according to a target route previously set while positioning the work vehicle by using a signal (for example, a GNSS signal) received from a satellite in a work region such as a farm field and a farm. In the above system, there is proposed a technique for stopping the automatic travel of the work vehicle when the signal from the satellite is interrupted (see, for example, Patent Document 1).

### PRIOR ART DOCUMENT

### PATENT DOCUMENT

Patent Document 1: WO2015/119266

### SUMMARY OF INVENTION

### TECHNICAL PROBLEM

In the conventional system, if the signal from the satellite is interrupted when the work vehicle performs a predetermined work while automatically traveling, the work vehicle is stopped at that point. Thus, for example, there is a problem in that when the work vehicle stops at a stop location where a sufficient space cannot be secured in an area surrounding the work vehicle, it is difficult for an operator to perform a recovery work of the work vehicle at the stop location or move the work vehicle to a wide space.

An object of the present invention relates to an automatic traveling method, an automatic traveling system, and an automatic traveling program, by which it is possible to move a work vehicle from a stop location when the work vehicle automatically traveling in a travel region stops automatic travel during a work.

### SOLUTION TO PROBLEM

An automatic traveling method according to the present invention includes causing a work vehicle to travel in a first travel mode in which the work vehicle automatically travels according to a target route previously set, based on positioning information of the work vehicle, in a travel region, switching, if a positioning accuracy of the work vehicle is less than a predetermined accuracy, from the first travel mode to a second travel mode in which the work vehicle travels according to a position of a work object arranged within the travel region to cause the work vehicle to travel, and causing the work vehicle to travel in the second travel mode to an end point of a work object route set according to the position of the work object.

An automatic traveling system according to the present invention includes a travel processing unit and a switching processing unit. The travel processing unit causes a work vehicle to travel in a first travel mode in which the work vehicle automatically travels according to a target route previously set, based on positioning information of the work vehicle, in a travel region. The switching processing unit switches, if a positioning accuracy of the work vehicle is less than a predetermined accuracy, from the first travel mode to a second travel mode in which the work vehicle travels according to a position of a work object arranged within the travel region. The travel processing unit causes the work vehicle to travel in the second travel mode to an end point of a work object route set according to the position of the work object.

An automatic traveling program according to the present invention causes one or more processors to execute causing a work vehicle to travel in a first travel mode in which the work vehicle automatically travels according to a target route previously set, based on positioning information of the work vehicle, in a travel region, switching, if a positioning accuracy of the work vehicle is less than a predetermined accuracy, from the first travel mode to a second travel mode in which the work vehicle travels according to a position of a work object arranged within the travel region to cause the work vehicle to travel, and causing the work vehicle to travel in the second travel mode to an end point of a work object route set according to the position of the work object.

### ADVANTAGEOUS EFFECT OF INVENTION

According to the present invention, it is possible to provide an automatic traveling method, an automatic traveling system, and an automatic traveling program, by which it is possible to move a work vehicle from a stop location when the work vehicle automatically traveling in a travel region stops automatic travel during a work.

### BRIEF DESCRIPTION OF DRAWINGS

FIG. 1 is a schematic diagram illustrating an entire configuration of an automatic traveling system according to an embodiment of the present invention.
FIG. 2 is a block diagram illustrating a configuration of the automatic traveling system according to the embodiment of the present invention.
FIG. 3 is an external view obtained when a work vehicle according to the embodiment of the present invention is viewed from a left front side.
FIG. 4A is an external view of a left side face obtained when the work vehicle according to the embodiment of the present invention is viewed from a left side.
FIG. 4B is an external view of a right side face obtained when the work vehicle according to the embodiment of the present invention is viewed from a right side.
FIG. 4C is an external view of a rear face obtained when the work vehicle according to the embodiment of the present invention is viewed from a rear face side.
FIG. 5 is a diagram illustrating an example of a crop row according to the embodiment of the present invention.
FIG. 6 is a diagram illustrating an example of a target route according to the embodiment of the present invention.
FIG. 7 is a diagram illustrating an example of a travel route in a crop row route travel mode according to an embodiment of the present invention.
FIG. 8 is a diagram for explaining an outline of a travel method in the crop row route travel mode according to the embodiment of the present invention.
FIG. 9A is a diagram for explaining a method of generating a target route according to the embodiment of the present invention.
FIG. 9B is a diagram for explaining a method of generating a target route according to the embodiment of the present invention.
FIG. 10 is a flowchart illustrating an example of a procedure of an automatic traveling process executed by an automatic traveling system according to the embodiment of the present invention.
FIG. 11 is an external view of a manual travel operation unit according to the embodiment of the present invention.

### DESCRIPTION OF EMBODIMENTS

The following embodiment is an example in which the present invention is embodied, and does not limit the technical scope of the present invention.

### [Automatic Traveling System 1]

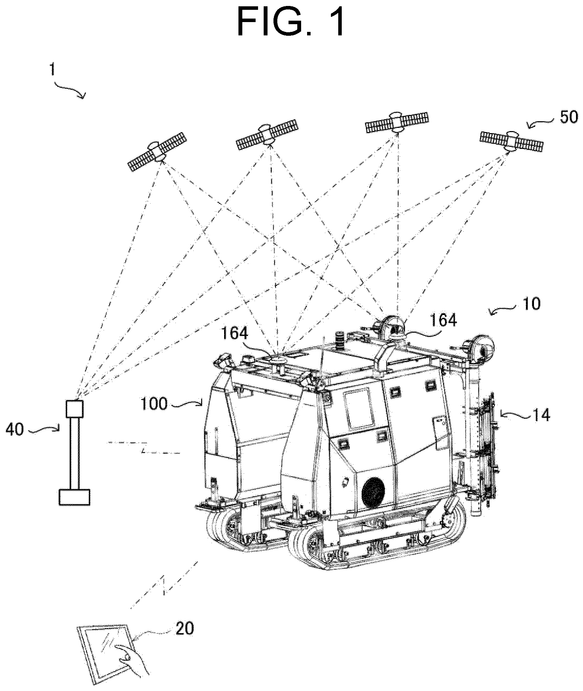

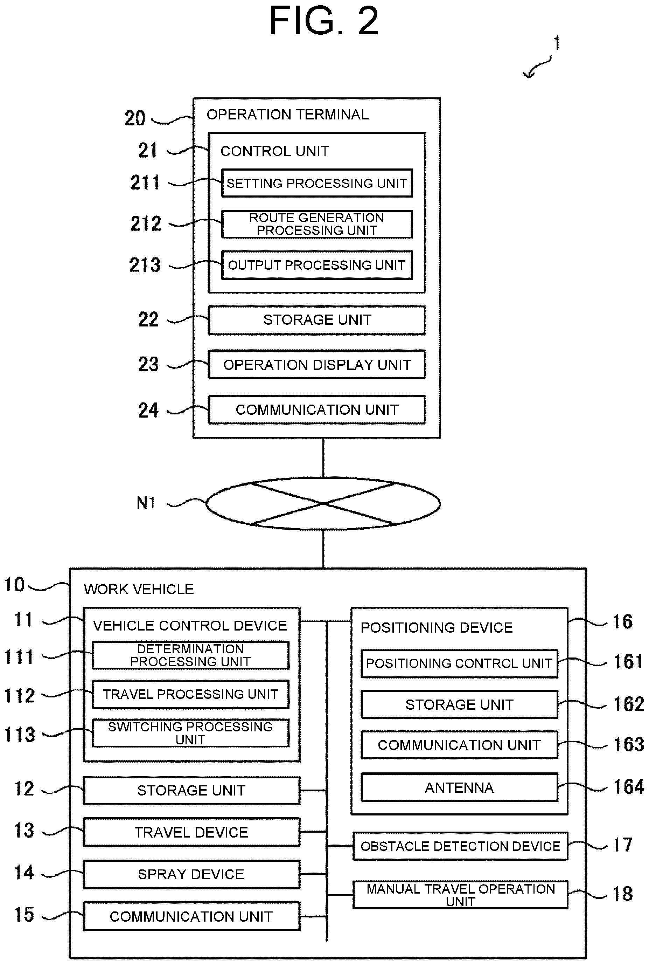

As illustrated in FIGS. 1 and 2, an automatic traveling system 1 according to the embodiment of the present invention includes a work vehicle 10, an operation terminal 20, a base station 40, and a satellite 50. The work vehicle 10 and the operation terminal 20 can communicate with each other via a communication network N1. For example, the work vehicle 10 and the operation terminal 20 can communicate via a mobile phone line network, a packet line network, or a wireless LAN.

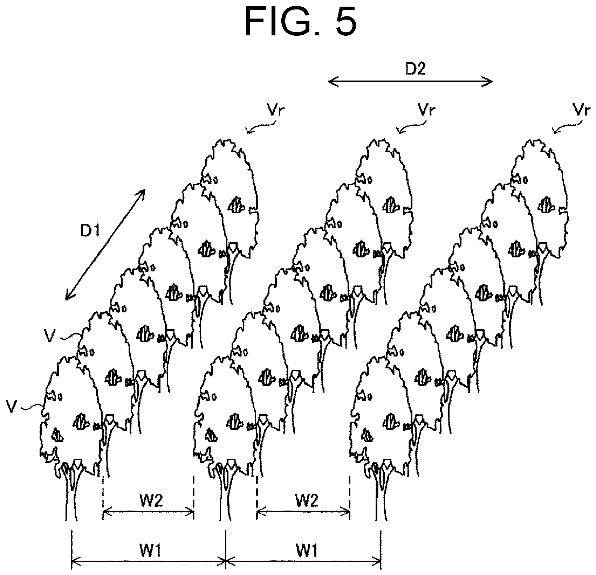

In the present embodiment, a case where the work vehicle 10 is a vehicle for performing a spraying work for spraying a chemical liquid, water, or the like on crops V (see FIG. 5) planted in a farm field F will be described as an example. The farm field F is an example of a travel region in the present invention, and the farm field F is, for example, an orchard such as a vineyard or an apple orchard. The crops V are, for example, grape trees. The spraying work is, for example, a work for spraying a spraying material such as a chemical liquid and water on the crops V. In another embodiment, the work vehicle 10 may be a vehicle for performing a weeding work, a vehicle for performing a leaf cutting work, or a vehicle for performing a harvesting work.

The crops V are arranged in a plurality of rows at predetermined intervals in the farm field F. Specifically, as illustrated in FIG. 5, a plurality of the crops V are planted linearly in a predetermined direction (a direction D1), and form crop rows Vr including the plurality of crops V arranged linearly. FIG. 5 illustrates three of the crop rows Vr. The crop rows Vr are arranged at a predetermined interval W1 in the row direction (D2 direction). A region (space) of an interval W2 between adjacent ones of the crop rows Vr is a work passage where the work vehicle 10 performs a spraying work on the crops V while traveling in the D1 direction.

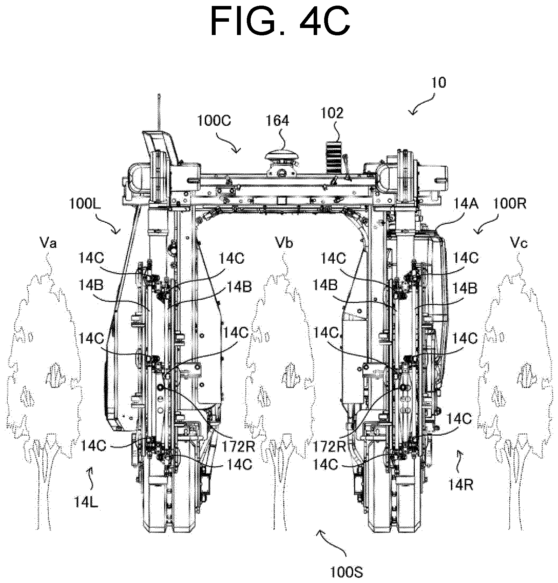

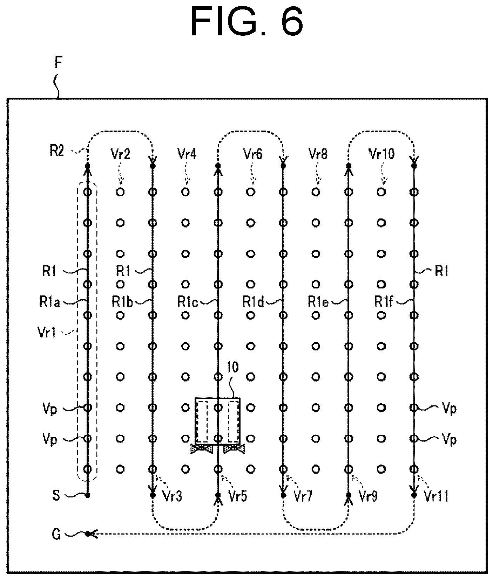

The work vehicle 10 is capable of traveling automatically (autonomously traveling) along a target route R set in advance. For example, as illustrated in FIG. 6, the work vehicle 10 automatically travels from a work start position S to a work end position G along the target route R including a work route R1 (work routes R1a to R1f) and a movement route R2. The work route R1 is a linear route on which the work vehicle 10 performs the spraying work on the crops V, and the movement route R2 is a route on which the work vehicle 10 moves between the crop rows Vr without performing the spraying work. The movement route R2 includes, for example, a turning route and a straight route. In the example illustrated in FIG. 6, the crops V forming crop rows Vr1 to Vr11 are arranged in the farm field F. In FIG. 6, positions (crop positions) where the crops V are planted are represented by "Vp". The work vehicle 10 traveling in the farm field F of FIG. 6 includes a vehicle body 100 having an inverted U-shape (see FIG. 4C), and while traveling in a state of spanning over one of the crop rows Vr, the work vehicle 10 sprays a chemical liquid on the crops V in the one crop row Vr and on the crop row Vr adjacent to the one crop row Vr. For example, as illustrated in FIG. 6, if the work vehicle 10 travels in a state of spanning over the crop row Vr5, a left-side vehicle body (a left-side part 100L) of the work vehicle 10 travels on a work passage between the crop rows Vr4 and Vr5, a right-side vehicle body (a right-side part 100R) of the work vehicle 10 travels on a work passage between the crop rows Vr5 and Vr6, and the work vehicle 10 sprays a chemical liquid on the crops V of the crop rows Vr4, Vr5, and Vr6.

The work vehicle 10 automatically travels in a predetermined row order. For example, the work vehicle 10 firstly travels across the crop row Vr1, next, travels across the crop row Vr3, and next, travels across the crop row Vr5. Thus, the work vehicle 10 automatically travels according to a preset order of the crop rows Vr. The work vehicle 10 may travel on each row in the order of arrangement of the crop rows Vr, or may travel in each of plurality of rows.

The satellite 50 is a positioning satellite configuring a satellite positioning system such as a global navigation satellite system (GNSS), and transmits a GNSS signal (satellite signal). The base station 40 is a reference point (reference station) configuring the satellite positioning system. The base station 40 transmits, to the work vehicle 10, correction information for calculating a current position of the work vehicle 10.

A positioning device 16 mounted in the work vehicle 10 executes a positioning process of calculating a current position (a latitude, a longitude, and an altitude) and a current direction of the work vehicle 10 by utilizing the GNSS signal transmitted from the satellite 50. Specifically, the positioning device 16 positions the work vehicle 10 by utilizing, for example, a Real Time Kinetic (RTK) method of positioning the work vehicle 10, based on positioning information (such as a GNSS signal) received by two receivers (an antenna 164 and the base station 40) and correction information generated by the base station 40. The positioning method is a well-known technique, and thus, detailed description thereof will be omitted. The work vehicle 10 is configured to be capable of automatically traveling when the position accuracy (positioning accuracy) of the positioning of the work vehicle 10 is equal to or more than a predetermined accuracy (threshold value).

Each constituent components configuring the automatic traveling system 1 will be described in detail below.

### [Work Vehicle 10]

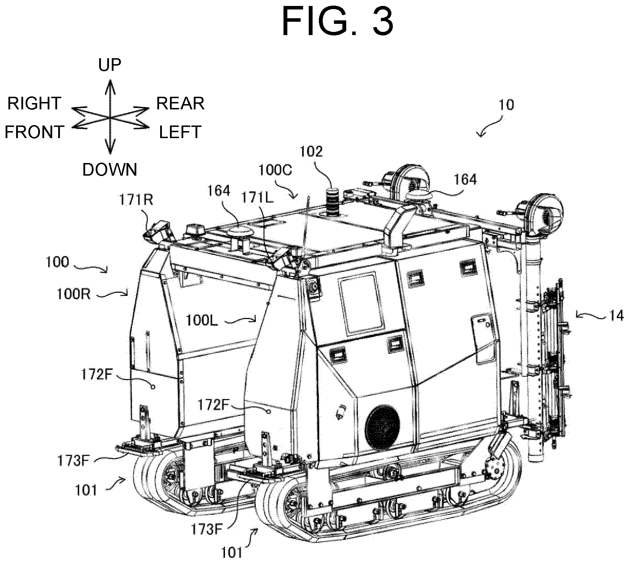

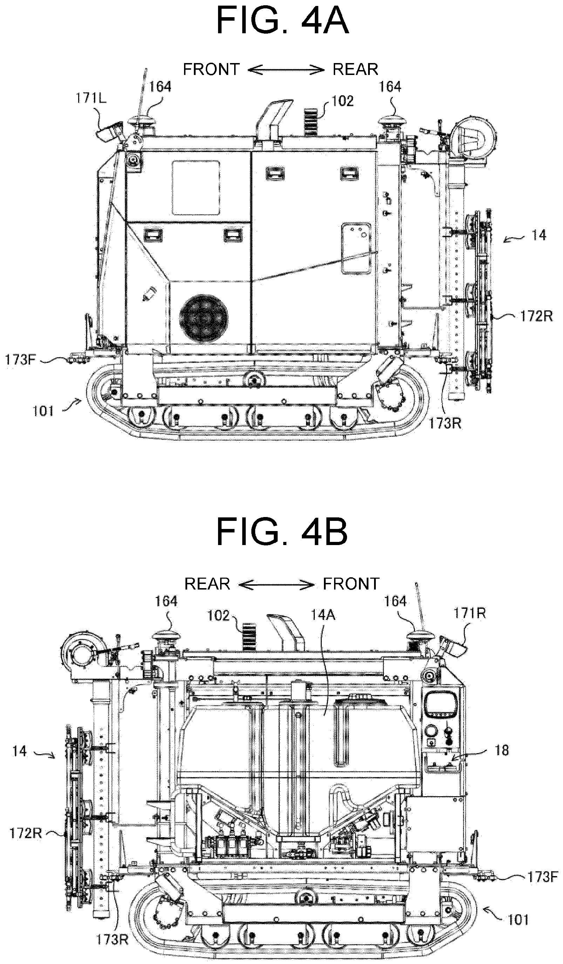

FIG. 3 is an external view obtained when the work vehicle 10 is viewed from a left front side. FIG. 4A is an external view of a left side face obtained when the work vehicle 10 is viewed from a left side, FIG. 4B is an external view of a right side face obtained when the work vehicle 10 is viewed from a right side, and FIG. 4C is an external view of a rear face obtained when the work vehicle 10 is viewed from a rear face side.

As illustrated in FIGS. 1 to 4, the work vehicle 10 includes a vehicle control device 11, a storage unit 12, a travel device 13, a spray device 14, a communication unit 15, a positioning device 16, an obstacle detection device 17, and a manual travel operation unit 18, for example. The vehicle control device 11 is electrically connected to the storage unit 12, the travel device 13, the spray device 14, the positioning device 16, the obstacle detection device 17, and a manual travel operation unit 18, for example. The vehicle control device 11 and the positioning device 16 may be wirelessly communicable.

The communication unit 15 is a communication interface for connecting the work vehicle 10 to the communication network N1 in a wired or wireless manner to execute data communication according to a predetermined communication protocol between the work vehicle 10 and an external device such as the operation terminal 20 via the communication network N1.

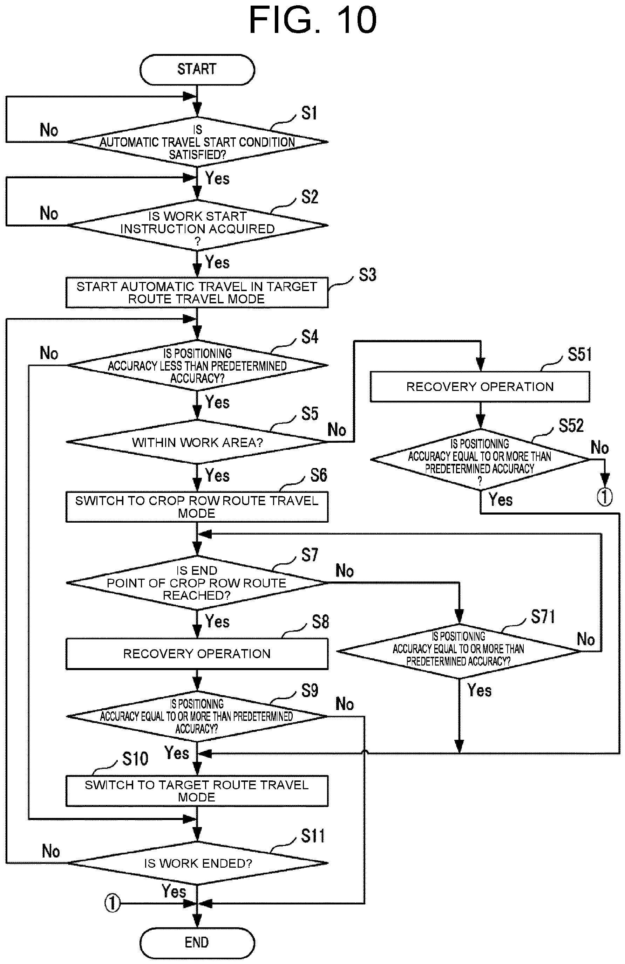

The storage unit 12 is a non-volatile storage unit including a hard disk drive (HDD) or a solid state drive (SSD) that stores various types of information. The storage unit 12 stores a control program such as an automatic traveling program for causing the vehicle control device 11 to execute an automatic traveling process (see FIG. 10) described later. For example, the automatic traveling program is recorded non-temporarily on a computer-readable recording medium such as a CD or a DVD, and is read by a predetermined reading device (not illustrated) to be stored in the storage unit 12. The automatic traveling program may be downloaded from a server (not illustrated) to the work vehicle 10 via the communication network N1 to be stored in the storage unit 12. The storage unit 12 stores route data including information on the target route R generated by the operation terminal 20. For example, the route data is transferred from the operation terminal 20 to the work vehicle 10 to be stored in the storage unit 12.

Here, the work vehicle 10 includes an inverted U-shaped vehicle body 100 that travels across the crops V (fruit trees) planted side by side in a plurality of rows in the farm field F. As illustrated in FIG. 4C, the vehicle body 100 is formed in an inverted U-shape by the left-side part 100L, the right-side part 100R, and a connection unit 100C connecting the left-side part 100L and the right-side part 100R, and a space 100S that allows the passage of the crops V is secured inside the left-side part 100L, the right-side part 100R, and the connection unit 100C.

A crawler 101 is provided at the lower end of each of the left-side part 100L and the right-side part 100R of the vehicle body 100. The left-side part 100L is provided with an engine (not illustrated), a battery (not illustrated), and the like. The right-side part 100R is provided with a storage tank 14A (see FIG. 4B) of the spray device 14 and the like. Thus, constitution components are arranged in a distributed manner in the left-side part 100L and the right-side part 100R of the vehicle body 100, and thus, a balance between the left and right sides and a low center of gravity are achieved in the work vehicle 10. Thus, the work vehicle 10 can stably travel on a slope or the like of the farm field F.

The travel device 13 is a drive unit that causes the work vehicle 10 to travel. The travel device 13 includes the engine, the crawler 101, and the like.

The left and right crawlers 101 are driven by power from the engine in a state where independent transmission is possible by a hydrostatic continuously variable transmission. Thus, when the left and right crawlers 101 are driven at a constant speed in the forward direction, the vehicle body 100 is in a forward-moving state of moving straight in the forward direction, and when the left and right crawlers 101 are driven at a constant speed in the backward direction, the vehicle body 100 is in a backward-moving state of moving straight in the backward direction. When the left and right crawlers 101 are driven at an irregular speed in the forward direction, the vehicle body 100 is in a forward-moving and turning state where the vehicle body 100 moves forward while turning, and when the left and right crawlers 101 are driven at an irregular speed in the backward direction, the vehicle body 100 is in a backward-moving and turning state where the vehicle body 100 moves backward while turning. When one of the left and right crawlers 101 is stopped in drive while the other one of the crawlers 101 is driven, the vehicle body 100 is in a pivot turning (pivot turn) state, and when the left and right crawlers 101 are driven at a constant speed in the forward direction and in the backward direction, the vehicle body 100 is in a spin turning (neutral turn) state. When the left and right crawlers 101 are stopped in drive, the vehicle body 100 stops traveling. The left and right crawlers 101 may have an electrically driven configuration in which the left and right crawlers 101 are driven by an electric motor.

As illustrated in FIG. 4C, the spray device 14 includes the storage tank 14A that stores chemical liquids or the like, a spraying pump (not illustrated) that pumps chemical liquids or the like, an electric spraying motor (not illustrated) that drives the spraying pump, two spraying pipes 14B installed in parallel on each of the left and right in a vertical position at the rear of the vehicle body 100, a total of 12 spraying nozzles 14C in which three nozzles are installed on each of the spraying pipes 14B, an electronically controlled valve unit (not illustrated) that changes a spraying amount and a spraying pattern of a chemical liquid, a plurality of spraying pipes (not illustrated) that connects these components, and the like.

Each of the spraying nozzles 14C is changeably attached to the corresponding spraying pipe 14B to be vertically repositionable. Thereby, each of the spraying nozzles 14C can change a distance from an adjacent spraying nozzle 14C and a height position with respect to the spraying pipe 14B according to the targets (crops V) to be sprayed. Further, each of the spraying nozzles 14C is attached so that the height position and the left-right position with respect to the vehicle body 100 can be changed according to the targets to be sprayed.

In the spray device 14, the number of the spraying nozzles 14C provided in each of the spraying pipes 14B can be variously changed according to the type of crops V, the length of each of the spraying pipes 14B, and the like.

As illustrated in FIG. 4C, three spraying nozzles 14C provided on the leftmost spraying pipe 14B out of the plurality of spraying nozzles 14C spray the chemical liquid to the left toward a crop Va located on the leftward and outward of the vehicle body 100. Three spraying nozzles 14C provided on the left inner spraying pipe 14B adjacent to the leftmost spraying pipe 14B out of the plurality of spraying nozzles 14C spray the chemical liquid to the right toward a crop Vb located in the left and right central space 100S of the vehicle body 100. Three spraying nozzles 14C provided on the rightmost spraying pipe 14B out of the plurality of spraying nozzles 14C spray the chemical liquid to the right toward a crop Vc located on the rightward and outward of the vehicle body 100. Three spraying nozzles 14C provided on the right inner spraying pipe 14B adjacent to the rightmost spraying pipe 14B out of the plurality of spraying nozzles 14C spray the chemical liquid to the left toward the crop Vb located in the space 100S.

With the above configuration, in the spray device 14, the two spraying pipes 14B and the six spraying nozzles 14C provided on the left-side part 100L of the vehicle body 100 function as a left spraying unit 14L. Further, the two spraying pipes 14B and the six spraying nozzles 14C provided on the right-side part 100R of the vehicle body 100 function as a right spray portion 14R. The left and right spraying units 14L and 14R are provided with a horizontal interval allowing for passage of the crop Vb (the space 100S) between the left and right spraying units 14L and 14R in a state where the left and right spraying units 14L and 14R can spray the chemical liquid in the left-right direction on the rear of the vehicle body 100.

In the spray device 14, the spraying patterns of the spraying units 14L and 14R include a four-way spraying pattern in which each of the spraying units 14L and 14R sprays the chemical liquid in both the left and right directions, and a direction-restricted spraying pattern in which the spraying direction of the spraying units 14L and 14R is restricted. The direction-restricted spraying pattern includes a left-side three-way spraying pattern in which the spraying unit 14L sprays the chemical liquid in both the left and right directions and the spraying unit 14R sprays the chemical liquid only in the left direction, and a right-side three-way spraying pattern in which the spraying unit 14L sprays the chemical liquid only in the right direction and the spraying unit 14R sprays the chemical liquid in both the left and right directions, a two-way spraying pattern in which the spraying unit 14L sprays the chemical liquid only in the right direction and the spraying unit 14R sprays the chemical liquid only in the left direction, a left-side unidirectional spraying pattern in which the spraying unit 14L sprays the chemical liquid only in the left direction and the spraying unit 14R does not spray the chemical liquid, and a right-side unidirectional spraying pattern in which the spraying unit 14R sprays the chemical liquid only in the right direction and the spraying unit 14L does not spray the chemical liquid.

The vehicle body 100 is equipped with an automatic travel control unit that causes the vehicle body 100 to automatically travel according to the target route R of the farm field F, based on the positioning information and the like acquired from the positioning device 16, an engine control unit that controls the engine, a hydro-static transmission (HST) control unit that controls the hydrostatic continuously variable transmission, and a work device control unit that controls a work device such as the spray device 14. Each of the control units is constructed by an electronic control unit equipped with a microcontroller and the like, various types of information and control programs stored in a non-volatile memory (for example, an EEPROM such as a flash memory) of the microcontroller, and the like. The various types of information stored in the non-volatile memory may include the target route R generated in advance or the like. In the present embodiment, the control units are collectively referred to as the "vehicle control device 11" (see FIG. 2).

The positioning device 16 is a communication equipment including a positioning control unit 161, a storage unit 162, a communication unit 163, the antenna 164, and the like. The antenna 164 is provided at the front and rear parts of a roof (the connection unit 100C) of the vehicle body 100 (see FIG. 3). The roof of the vehicle body 100 is also provided with an indication lamp 102 or the like for indicating a travel state of the work vehicle 10 (see FIG. 3). The battery is connected to the positioning device 16, so that the positioning device 16 can operate even when the engine is stopped.

The communication unit 163 is a communication interface for connecting the positioning device 16 to the communication network N1 in a wired or wireless manner to execute data communication, according to a predetermined communication protocol, between the communication unit 163 and an external device such as the base station 40 via the communication network N1.

The antenna 164 is an antenna that receives radio waves (GNSS signals) transmitted from satellites. Since the antenna 164 is provided at the front and rear parts of the work vehicle 10, the current position and the current orientation of the work vehicle 10 can be accurately positioned.

The positioning control unit 161 is a computer system including one or more processors and a storage memory such as a non-volatile memory and a RAM. The storage unit 162 is a control program for causing the positioning control unit 161 to execute the positioning process, and a non-volatile memory for storing data such as positioning information and movement information. The positioning control unit 161 positions the current position and the current orientation of the work vehicle 10 by a predetermined positioning method (RTK method or the like) based on the GNSS signal received from the satellite 50 by the antenna 164.

The obstacle detection device 17 includes a LiDAR sensor 171L provided on the front and left side of the vehicle body 100 and a LiDAR sensor 171R provided on the front and right side of the vehicle body 100 (see FIG. 3). Each LiDAR sensor measures a distance from the LiDAR sensor to each ranging point (measurement target) in the measurement range by a time of flight (TOF) method for measuring the distance to the ranging point, based on a round-trip time required by laser light input to the LiDAR sensor to reach the ranging point and return to the LiDAR sensor, for example.

The LiDAR sensor 171L has a predetermined range on the front and left side of the vehicle body 100 set as a measurement range, and the LiDAR sensor 171R has a predetermined range on the front and right side of the vehicle body 100 set as a measurement range. Each LiDAR sensor transmits measurement information such as the measured distance to each ranging point and the scanning angle (coordinates) for each ranging point to the vehicle control device 11.

Further, the obstacle detection device 17 includes left and right ultrasonic sensors 172F (see FIG. 3) provided on the front side of the vehicle body 100 and left and right ultrasonic sensors 172R (see FIGS. 4A to 4C) provided on the rear side of the vehicle body 100. Each ultrasonic sensor measures a distance from the ultrasonic sensor to a measurement target by the TOF method of measuring a distance to a ranging point, based on a round-trip time from when an ultrasonic wave is transmitted by the ultrasonic sensor to reach the ranging point to when the ultrasonic wave returns.

The ultrasonic sensor 172F on the front and left side has a predetermined range on the front and left side of the vehicle body 100 set as the measurement range, the ultrasonic sensor 172F on the front and right side has the predetermined range on the front and right side of the vehicle body 100 set as the measurement range, the ultrasonic sensor 172R on the rear and left side has a predetermined range on the rear and left side of the vehicle body 100 set as the measurement range, and the ultrasonic sensor 172R on the rear and right side has the predetermined range on the rear and right side of the vehicle body 100 set as the measurement range. Each ultrasonic sensor transmits measurement information including the distance to the measurement target and the direction of the object to be measured to the vehicle control device 11.

Further, the obstacle detection device 17 includes left and right contact sensors 173F (see FIG. 3) provided on the front side of the vehicle body 100 and left and right contact sensors 173R (see FIGS. 4A and 4B) provided on the rear side of the vehicle body 100. The contact sensor 173F on the front side of the vehicle body 100 detects an obstacle when an obstacle comes into contact with the contact sensor 173F. The spray device 14 is provided in front of the contact sensor 173R on the rear side of the vehicle body 100 (rear side of the work vehicle 10), and when an obstacle comes into contact with the spray device 14, the contact sensor 173R detects the obstacle by the spray device 14 moving to the rear (toward the front side of the work vehicle 10). Each contact sensor transmits a detection signal to the vehicle control device 11 when an obstacle is detected.

The vehicle control device 11 includes a control device such as a CPU, a ROM, and a RAM The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (work region) for various types of processes executed by the CPU. The vehicle control device 11 controls the work vehicle 10 by causing the CPU to execute various types of control programs stored in advance in the ROM or the storage unit 12.

The vehicle control device 11 controls the travel of the work vehicle 10. Specifically, as illustrated in FIG. 2, the vehicle control device 11 includes various types of processing units such as a determination processing unit 111, a travel processing unit 112, and a switching processing unit 113. The vehicle control device 11 functions as the various types of processing units by causing the CPU to execute various types of processes according to the control programs. Some or all of the processing units may be configured by an electronic circuit. The control programs may be programs for causing a plurality of processors to function as the processing units.

The determination processing unit 111 determines a positioning state of the work vehicle 10. Specifically, the determination processing unit 111 determines whether the positioning accuracy of the work vehicle is equal to or more than the predetermined accuracy or lower than the predetermined accuracy. More specifically, the positioning control unit 161 determines that the positioning state is in a high accuracy state when the number of satellites 50 from which a GNSS signal can be received is equal to or more than a predetermined number and an evaluation value of quality of the GNSS signal is a predetermined value. The high accuracy state means, for example, a state in which the positioning state is capable of RTK positioning. On the other hand, the positioning control unit 161 determines that the positioning state decreases (low accuracy state) when the number of satellites 50 from which a GNSS signal can be received is less than a predetermined number and the evaluation value of quality of the GNSS signal is not a predetermined value. The low accuracy state means, for example, a state in which the positioning state is not capable of RTK positioning. The positioning state varies due to the influence of obstacles (a windbreaks, a building, and the like) around the work vehicle 10, an abnormality of a receiver (the antenna 164 and the base station 40), and the like.

The determination processing unit 111 performs the determination process, based on the positioning state determined by the positioning control unit 161. For example, the determination processing unit 111 determines that the positioning accuracy of the work vehicle 10 is equal to or more than a predetermined accuracy if the positioning state is the high accuracy state. On the other hand, the determination processing unit 111 determines that the positioning accuracy of the work vehicle 10 is less than a predetermined accuracy if the positioning state decreases from the high accuracy state.

The travel processing unit 112 executes a traveling process for causing the work vehicle 10 to travel, based on the positioning state of the work vehicle 10. For example, if the determination processing unit 111 determines that the positioning accuracy of the work vehicle 10 is equal to or more than a predetermined accuracy, the travel processing unit 112 causes the work vehicle 10 to travel in a target route travel mode M1 (corresponding to a first travel mode in the present invention) in which the work vehicle 10 automatically travels along the target route R, based on positioning information including the position and orientation of the work vehicle 10 positioned by the positioning device 16. For example, if the positioning state is a state capable of the RTK positioning, the travel processing unit 112 causes the work vehicle 10 to automatically travel in the target route travel mode M1, based on positioning information of the work vehicle 10 positioned by the positioning device 16. Accordingly, the work vehicle 10 starts automatic travel along the target route R. It is noted that the condition that the positioning state is a state capable of the RTK positioning (high accuracy state) is included in the conditions for the work vehicle 10 to start automatic travel (automatic travel start condition).

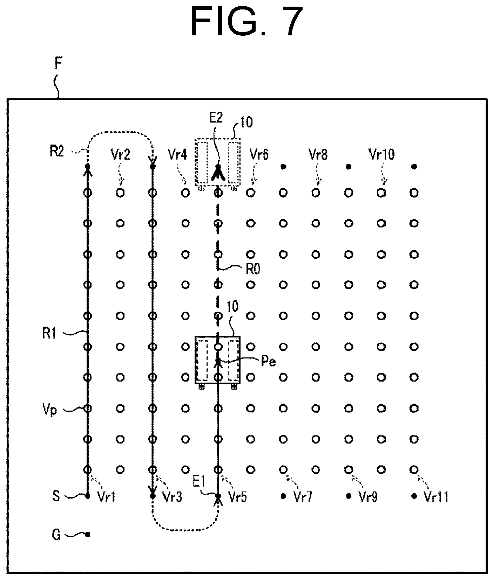

Here, when the positioning accuracy decreases while the work vehicle 10 is automatically traveling according to the target route R and a state where the RTK positioning is not possible is reached (less than a predetermined accuracy), it is not possible to guarantee the position accuracy of the work vehicle 10, and thus, the travel processing unit 112 interrupts the automatic travel and stops the work vehicle 10. For example, as illustrated in FIG. 7, if the positioning accuracy is less than a predetermined accuracy when the work vehicle 10 performs the spraying work while automatically traveling along the crop row Vr5 (an example of a first work route in the present invention), the work vehicle 10 stops at that point (position Pe). The work vehicle 10 also stops the spraying work at the position Pe. In this case, the crops V are arranged around the work vehicle 10, and thus, it is difficult for the operator, for example, to visit the stop location (position Pe) of the work vehicle 10 and perform the recovery work of the work vehicle 10.

Therefore, in the present embodiment, if the positioning accuracy of the work vehicle 10 is less than a predetermined accuracy, the switching processing unit 113 switches the travel mode of the work vehicle 10 from the target route travel mode M1 to a crop row route travel mode M2 (corresponding to a second travel mode in the present invention) in which the work vehicle 10 travels according to the position of the crops V arranged in the farm field F. The crop row route travel mode M2 is a travel mode in which the work vehicle 10 travels along the crop row route R0 estimated based on the measurement results of the LiDAR sensors 171L and 171R, for example.

The travel processing unit 112 causes the work vehicle 10 to travel to the end point of a predetermined work route R1 if the positioning accuracy is less than the predetermined accuracy while the work vehicle 10 is traveling along the work route R1 of a plurality of the work routes R1. For example, the travel processing unit 112 causes the work vehicle 10 to travel to the end point of the work route R1 in the crop row route travel mode M2 if the travel mode is switched to the crop row route travel mode M2 while the work vehicle 10 automatically travels along the work route R1. Specifically, the obstacle detection device 17 integrates the detection results of obstacles on the work path R1 and the measurement results of the LiDAR sensors 171L and 171R to estimate the work route R1 crossed by the work vehicle 10, specifically, the crop row route R0 of a crop row (a crop row Vr5 in FIG. 7) (an example of a work object route in the present invention). The obstacle detection device 17 also transmits the positions (coordinates) of a starting point and an ending point of the estimated crop row route R0 to the vehicle control device 11. The travel processing unit 112 causes the work vehicle 10 to automatically travel along the estimated crop row route R0 without using the GNSS signal in the crop row route travel mode M2.

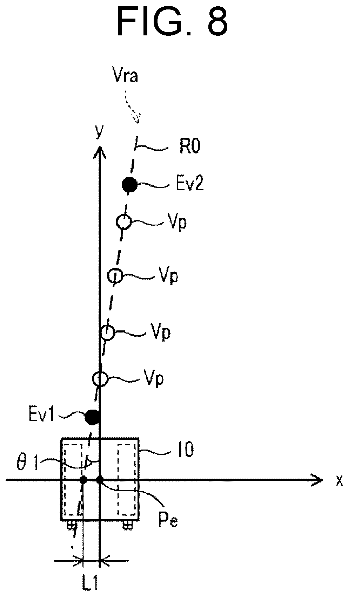

FIG. 8 illustrates an outline of a travel method for the crop row route travel mode M2. In FIG. 8, R0 represents an estimated route of a crop row Vra, Ev1 represents a starting point of the crop row Vra, Ev2 represents an ending point of the crop row Vra, Vp represents a crop contained in the crop row Vra, and Pe represents a position at which the work vehicle 10 stops when the positioning accuracy is less than the predetermined accuracy. The ending point Ev2 may be the same as the ending point E2 illustrated in FIG. 7. The starting point Ev1 is, for example, a position of the crops V closest to the position Pe from among the crops V contained in the crop row Vra.

The travel processing unit 112 calculates a horizontal position deviation L1 and an orientation deviation θ1 of the work vehicle 10 with respect to the crop row Vra, and causes the work vehicle 10 to travel from the position Pe to the ending point Ev2 while controlling the posture of the work vehicle 10 so that the position deviation L1 and the orientation deviation θ1 is small.

Here, since the result of estimating the crop row Vra includes an error, it is preferable to perform a filtering process using a moving average filter, a low-pass filter, or the like on the calculated position deviation L1 and orientation deviation θ1. Then, it is preferable that the travel processing unit 112 controls the travel of the work vehicle 10 by using the result of the filtering process.

Further, to enhance the accuracy of estimation of the crop row Vra, the result of estimating the past crop row Vra may be used. In this case, it is necessary to increase the number of end points of the crop row Vra, and it is thus necessary to calculate a relative movement amount of the work vehicle 10 to use past data, and convert the coordinates of the detected position of the past crop row Vra. In the calculation of the relative movement amount, the data of a rotation speed sensor and an inertial measurement unit (IMU) mounted on the crawler 101 are integrated by a known method such as a Kalman filter to estimate a movement amount of the crop row Vra. The work vehicle 10 calculates the distance to the ending point from the positioning information (GNSS position information) every control cycle during automatic travel, and thus, the travel processing unit 112 executes a process of determining the arrival of the work vehicle 10 at the end point (the ending point Ev2) of the crop row Vra, based on information of the distance to the ending point before the positioning accuracy is less than a predetermined accuracy and the estimated movement amount of the work vehicle 10, and causes the work vehicle 10 to automatically travel until the work vehicle 10 arrives at the end point. It is noted that, depending on the arrangement of the crops V, the LiDAR sensors 171L and 171R sensors may fail to detect the crops V. In this case, when an estimation error of the crop row Vra occurs continuously a prescribed number of times, the travel processing unit 112 terminates the automatic travel in the crop row route travel mode M2.

Due to various reasons such as it is not necessary to maintain a previously set travel speed for interrupting the spraying work or a movement amount estimation accuracy of the work vehicle 10 and a detection accuracy of the crop row Vra are improved, the travel processing unit 112 may set the moving speed during the automatic travel in the crop row route travel mode M2 to a speed slower than the traveling speed in the target route travel mode M1. The travel processing unit 112 stops the spraying work while the work vehicle 10 automatically travels in the crop row route travel mode M2.

For example, in the farm field F illustrated in FIG. 7, when the travel processing unit 112 causes the work vehicle 10 to automatically travel in the crop row route travel mode M2 and reaches the ending point E2 of the crop row Vr5, the travel processing unit 112 stops the work vehicle 10 at the ending point E2. The ending point E2 is an end point of the crop row route R0 and is included in a region not arranged with the crops V (for example, the headland region). This enables the operator to easily visit the location of the work vehicle 10 stopped at the ending point E2 to perform a recovery work or the like. As a result of the recovery work by the operator, when the positioning accuracy is equal to or more than a predetermined accuracy, the travel processing unit 112 switches the travel mode to the target route travel mode M1. The travel processing unit 112 causes the work vehicle 10 to automatically travel along the target route R, based on positioning information positioned by the positioning device 16 from the ending point E2 at which the work vehicle 10 stops. The ending point E2 is an example of an end point of the present invention.

The travel processing unit 112 may record the position of the work vehicle 10 (position Pe) at the time when the travel mode is switched from the target route travel mode M1 in the crop row route R0 to the crop row route travel mode M2. In this case, when the positioning accuracy is equal to or more than a predetermined accuracy as a result of the recovery work by the operator, the travel processing unit 112 switches the travel mode to the target route travel mode M1, and based on the positioning information positioned by the positioning device 16, from the position Pe, causes the work vehicle 10 to automatic travel along the target route R. For example, in FIG. 7, the travel processing unit 112 may cause the work vehicle 10 to automatically travel from the ending point E2 in the target route travel mode M1, and after the work of the crop row Vr11 ends, to move to the position Pe, and to execute, from the position Pe, the automatic travel and the spraying work in an unworked region of the crop row Vr5.

As described above, if the positioning accuracy of the work vehicle 10 is equal to or more than a predetermined accuracy, the travel processing unit 112 causes the work vehicle 10 to automatically travel along the target route R (target route travel mode M1), based on the positioning information utilizing the GNSS signal, and if the positioning accuracy of the work vehicle 10 is less than a predetermined accuracy, switches the travel mode from the target route travel mode M1 to the crop row route travel mode M2 and causes the work vehicle 10 to automatically travel along the estimated crop row route R0. The travel processing unit 112 is an example of a travel processing unit in the present invention.

When acquiring a travel stop instruction from the operation terminal 20, the travel processing unit 112 causes the work vehicle 10 to stop automatic travel. For example, if the operator depresses a stop button on the operation screen of the operation terminal 20, the operation terminal 20 outputs the travel stop instruction to the work vehicle 10. When acquiring the travel stop instruction from the operation terminal 20, the travel processing unit 112 causes the work vehicle 10 to stop automatic travel. Thus, the work vehicle 10 stops automatic travel and stops the spraying work by the spray device 14.

The above-described configuration of the work vehicle 10 is an example of the configuration of the work vehicle according to the present invention, and the present invention is not limited to the above-described configuration. The above-mentioned work vehicle 10 is a vehicle capable of performing the spraying work for spraying the spraying material to the first crop row Vr and the second crop row Vr in each of the left-right direction of the first crop row Vr while traveling across the first crop row Vr. In another embodiment, the vehicle body 100 of the work vehicle 10 may have a typical shape instead of the inverted U-shape, so that the vehicle body 100 entirely travels between the crop rows Vr (work passages). In this case, the work vehicle 10 automatically travels sequentially on each work passage, without spanning over the crop rows Vr. The spray device 14 is provided with one spraying unit and performs a spraying work while switching between a spraying pattern in which the chemical liquid is sprayed in both left and right directions, a spraying pattern in which the chemical liquid is sprayed only in the left direction, and a spraying pattern in which the chemical liquid is sprayed only in the right direction.

### [Operation Terminal 20]

As illustrated in FIG. 2, the operation terminal 20 is an information processing device including a control unit 21, a storage unit 22, an operation display unit 23, and a communication unit 24. The operation terminal 20 may be composed of a mobile terminal such as a tablet terminal or a smartphone.

The communication unit 24 is a communication interface for connecting the operation terminal 20 to the communication network N1 in a wired or wireless manner to execute data communication according to a predetermined communication protocol between the operation terminal 20 and an external device such as one or more work vehicles 10 via the communication network N1.

The operation display unit 23 is a user interface including a display unit such as a liquid crystal display or an organic EL display that displays various types of information, and an operation unit such as a mouse, a keyboard, or a touch panel that receives an operation. On the operation screen displayed on the display unit, the operator can operate the operation unit to register various types of information (work vehicle information, farm field information, work information, etc., which will be described later). Further, the operator can operate the operation unit to give a work start instruction, a travel stop instruction, and the like to the work vehicle 10. At a place away from the work vehicle 10, the operator is capable of grasping the travel state, a work situation, and a surrounding situation of the work vehicle 10 automatically traveling according to the target route R within the farm field F, based on a travel trajectory displayed on the operation terminal 20 and a surrounding image of the vehicle body 100.

The storage unit 22 is a non-volatile storage unit, such as an HDD or an SSD that stores various types of information. The storage unit 22 stores a control program such as an automatic traveling program for causing the control unit 21 to execute an automatic traveling process (see FIG. 10) described later. For example, the automatic traveling program is recorded non-temporarily on a computer-readable recording medium such as a CD or a DVD, and is read by a predetermined reading device (not illustrated) to be stored in the storage unit 22. The automatic traveling program may be downloaded from a server (not illustrated) to the operation terminal 20 via the communication network N1 to be stored in the storage unit 22.

The control unit 21 includes control devices such as a CPU, a ROM, and a RAM The CPU is a processor that executes various types of arithmetic processes. The ROM is a non-volatile storage unit in which a control program such as BIOS and OS for causing the CPU to execute various types of arithmetic processes is stored in advance. The RAM is a volatile or non-volatile storage unit that stores various types of information, and is used as a temporary storage memory (working area) for various types of processes executed by the CPU. The control unit 21 controls the operation terminal 20 by causing the CPU to execute various types of control programs stored in advance in the ROM or the storage unit 22.

As illustrated in FIG. 2, the control unit 21 includes various types of processing units such as a setting processing unit 211, a route generation processing unit 212, and an output processing unit 213. The control unit 21 functions as the various types of processing units by causing the CPU to execute various types of processes according to the control programs. Some or all of the processing units may be configured by an electronic circuit. The control programs may be programs for causing a plurality of processors to function as the processing units.

The setting processing unit 211 sets and registers information on the work vehicle 10 (hereinafter referred to as work vehicle information), information on the farm field F (hereinafter referred to as farm field information), and information on work (here, a spraying work) (hereinafter, work information).

In the setting process of the work vehicle information, the setting processing unit 211 sets information about the model of the work vehicle 10, the position where the antenna 164 is attached in the work vehicle 10, kinds of the work machine (here, the spraying device 14), the size and the shape of the work machine, the position of the work machine relative to the work vehicle 10, a vehicle speed and an engine RPM of the work vehicle 10 during working, a vehicle speed and an engine RPM of the work vehicle 10 during turning, and the like as a result of the operator operating for registering such information on the operation terminal 20. In the present embodiment, information about the spray device 14 is set as the information of the working machine.

In the setting process of the farm field information, the setting processing unit 211 sets information about the position and the shape of the farm field F, the work start position S to start the work and the work end position G to end the work (see FIG. 6), a working direction, and the like, as a result of the operator operating for registering such information on the operation terminal 20. The working direction means a direction in which the work vehicle 10 travels while performing the spraying work by the spray device 14 in the working area which is the area excluding the non-work region such as the headland from the farm field F.

It is possible to automatically obtain the information about the position and the shape of the farm field F when the operator manually causes the work vehicle 10 to encircle along the outer perimeter of the farm field F, for example, and a transition of the position information of the antenna 164 at that time is recorded. It is also possible to obtain the position and the shape of the farm field F, based on a polygon obtained by the operator operating the operation terminal 20 in a state where a map is displayed on the operation terminal 20 and designating a plurality of points on the map. A region designated by the obtained position and shape of the farm field F is a region (travel region) where the work vehicle 10 can travel.

In the setting process of the work information, as the work information, the setting processing unit 211 is configured to be set with a skipped number being the number of work routes to be skipped if the work vehicle 10 turns in the headland, a width of the headland, and the like.

The route generation processing unit 212 generates a target route R being a route on which the work vehicle 10 automatically travels, based on each of the setting information. The target route R is, for example, a route from the work start position S to the work end position G (see FIG. 6). The target route R illustrated in FIG. 6 includes a linear work route R1 for spraying the chemical liquid to the crop V in the region where the crop V is planted, and a movement route R2 for moving between the crop rows Vr without performing the spraying work.

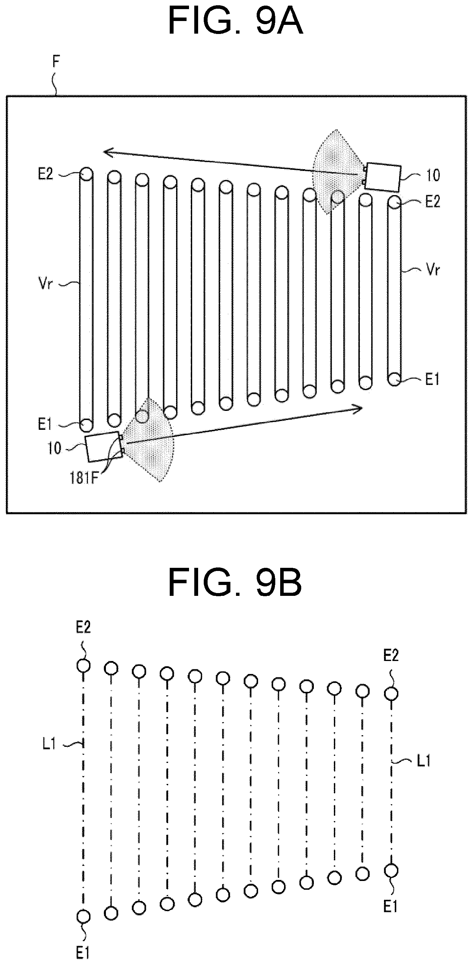

An example of a method of generating the target route R will be described with reference to FIGS. 9A and 9B. FIG. 9A schematically illustrates the crop rows Vr. Firstly, the operator causes the work vehicle 10 to manually travel along the outer perimeter of the crop rows Vr (see FIG. 9A). While traveling, the work vehicle 10 detects end points E1 on one side (lower side in FIG. 9A) and end points E2 on the other side (upper side in FIG. 9A) of the crop rows Vr, and acquires position information (coordinates) of each of the end points E1 and E2. The end points E1 and E2 may be positions of crops V that are already planted, or may be positions of target objects indicating positions of crops V that are to be planted. When acquiring the position information (coordinates) of each of the end points E1 and E2 from the work vehicle 10, the route generation processing unit 212 sets lines L1 (see FIG. 9B) connecting corresponding ones of the end points E1 and E2 as work routes of the crop rows Vr, to generate the target route R including a plurality of the work routes and movement routes (turning routes). The method of generating the target route R is not limited to the method described above. The route generation processing unit 212 may store the generated target route R into the storage unit 22.

The output processing unit 213 outputs, to the work vehicle 10, route data including information about the target route R generated by the route generation processing unit 212. The output processing unit 213 may output the route data to a server (not illustrated). The server stores and manages a plurality of the route data acquired from each of the plurality of operation terminals 20 in association with the operation terminal 20 and the work vehicle 10.

In addition to the above-described processes, the control unit 21 executes a process for causing the operation display unit 23 to display various types of information. For example, the control unit 21 causes the operation display unit 23 to display a registration screen for registering work vehicle information, farm field information, work information, and the like, an operation screen for generating the target route R, an operation screen for causing the work vehicle 10 to start automatic travel, a display screen for displaying a travel state of the work vehicle 10, and the like.

Further, the control unit 21 receives various types of operations from the operator. Specifically, the control unit 21 receives a work start instruction from the operator to cause the work vehicle 10 to start a work, a travel stop instruction to stop the traveling of the work vehicle 10 traveling automatically, and the like. When the control unit 21 receives each of the instructions, the control unit 21 outputs each of the instructions to the work vehicle 10.

When the vehicle control device 11 of the work vehicle 10 acquires the work start instruction from the operation terminal 20, the vehicle control device 11 starts the automatic traveling and a spraying work of the work vehicle 10. When the vehicle control device 11 acquires the travel stop instruction from the operation terminal 20, the vehicle control device 11 stops the automatic traveling and spraying work of the work vehicle 10.

The operation terminal 20 may be accessible to the website (agricultural support site) of the agricultural support service provided by the server via the communication network N1. In this case, the operation terminal 20 is capable of functioning as an operation terminal of the server as a result of the browser program being executed by the control unit 21.

### [Automatic Traveling Process]

An example of the automatic traveling process executed by the vehicle control device 11 of the work vehicle 10 will be described below with reference to FIG. 10.

The present invention may be regarded as an invention of an automatic traveling method in which one or more steps included in the automatic traveling process are executed. Further, one or more steps included in the automatic traveling process described herein may be omitted where appropriate. It is noted that the steps in the automatic traveling process may be executed in a different order as long as a similar operation and effect are obtained. Here, a case where each of the steps in the automatic traveling process is executed by the vehicle control device 11 is described by way of example, but another embodiment may be an automatic traveling method in which the steps in the automatic traveling process are executed in a distributed manner by one or more processors.

In step S1, the vehicle control device 11 determines whether the automatic travel start condition is satisfied. For example, the vehicle control device 11 determines that the automatic travel start condition is satisfied (S1: Yes) if the current position of the work vehicle 10 matches the work start position S and the positioning accuracy of the work vehicle 10 is equal to or more than a predetermined accuracy (in a state where the positioning state is capable of TRK positioning). In this case, the process proceeds to step S2. On the other hand, if either of the above two conditions is not satisfied, the vehicle control device 11 waits until both of the above conditions are satisfied (S1: No).

In step S2, the vehicle control device 11 determines whether the work start instruction has been acquired from the operation terminal 20. For example, when an operator depresses a start button on the operation terminal 20, the operation terminal 20 outputs the work start instruction to the work vehicle 10. When the vehicle control device 11 acquires the work start instruction from the operation terminal 20 (S2: Yes), the process proceeds to step S3. The vehicle control device 11 waits until the work start instruction is acquired from the operation terminal 20 (S2: No).

In step S3, the vehicle control device 11 starts the automatic travel in the target route travel mode M1. For example, when acquiring the work start instruction from the operation terminal 20, the vehicle control device 11 starts the automatic travel along the target route R included in the route data, based on the positioning information (RTK positioning information) of the work vehicle 10. Further, the vehicle control device 11 causes the spray device 14 to start the spraying work for spraying a chemical liquid on the crop rows Vr.

Next, in step S4, the vehicle control device 11 determines whether the positioning accuracy is less than a predetermined accuracy. If the positioning accuracy is less than the predetermined accuracy (S4: Yes), the process proceeds to step S5. On the other hand, if the positioning accuracy is equal to or more than the predetermined accuracy (S4: No), the process proceeds to step S11. Thus, during the spraying work by the work vehicle 10 while the work vehicle 10 is automatically traveling in the target route travel mode M1, the vehicle control device 11 continuously executes the determination process as to whether the positioning accuracy is less than the predetermined accuracy.

Next, in step S5, the vehicle control device 11 determines whether the current position of the work vehicle 10 is within the work region or the non-work region (headland region). If the current position of the work vehicle 10 is within the work region (S5: Yes), the process proceeds to step S6. If the current position of the work vehicle 10 is within the non-work region (S5: No), the process proceeds to step S51.

In step S6, the vehicle control device 11 switches the travel mode from the target route travel mode M1 to the crop row route travel mode M2 in which the work vehicle 10 travels along the crop row route R0. When switching the travel mode to the crop row route travel mode M2, the vehicle control device 11 causes the work vehicle 10 to travel in the crop row route travel mode M2. For example, the vehicle control device 11 causes the work vehicle 10 to automatically travel toward the ending point of the crop row route R0 along the crop row route R0 estimated based on the measurement results of the LiDAR sensors 171L and 171R.

The vehicle control device 11 sets the travel speed of the work vehicle 10 in the crop row route travel mode M2 to a speed slower than the travel speed of the work vehicle 10 in the target route travel mode M1. As a result, it is possible to cause the work vehicle 10 to safely travel to the ending point even if the position accuracy of the work vehicle 10 is low. The vehicle control device 11 stops the spraying work while the work vehicle 10 travels automatically in the crop row route travel mode M2. This makes it possible to prevent the spraying work from being performed in a state where the accuracy of the spraying work is low while the work vehicle 10 is moving to the ending point. The vehicle control device 11 records the position Pe of the work vehicle 10 on the crop row route R0 at the time when the travel mode is switched from the target route travel mode M1 to the crop row route travel mode M2. As a result, after the positioning accuracy of the work vehicle 10 is restored to the predetermined accuracy or higher, it is possible for the work vehicle 10 to surely perform the spraying work on an unsprayed region from the position Pe to the ending point.

Next, in step S7, the vehicle control device 11 determines whether the work vehicle 10 reaches the end point of the crop row route R0. Specifically, the vehicle control device 11 determines whether the work vehicle 10 reaches the ending point E2 (see FIG. 7) of the estimated crop row route R0. If the work vehicle 10 reaches the end point of the crop row route R0 (S7: Yes), the process proceeds to step S8. If the work vehicle 10 does not reach the end point of the crop row route R0 (S7: No), the process proceeds to step S71. In step S71, the vehicle control device 11 determines whether the positioning accuracy is equal to or more than a predetermined accuracy. If the positioning accuracy is equal to or more than the predetermined accuracy (S71: Yes), the process proceeds to step S10. On the other hand, when the positioning accuracy is less than the predetermined accuracy (S71: No), the process returns to step S7. As described above, when the positioning accuracy is restored to the predetermined accuracy or higher while the work vehicle 10 is traveling on the crop row route R0 in the crop row route travel mode M2 (S71: Yes), the process proceeds to step S10.

In step S8, the vehicle control device 11 performs the recovery operation. Specifically, the vehicle control device 11 stops the work vehicle 10 at the ending point Ev2 and accepts the recovery work by the operator at the ending point Ev2. After the step S8, the process proceeds to step S9. In step S9, the vehicle control device 11 determines whether the positioning accuracy is equal to or more than a predetermined accuracy. If the positioning accuracy is equal to or more than the predetermined accuracy (S9: Yes), the process proceeds to step S10. On the other hand, if the positioning accuracy is less than the predetermined accuracy (S9: No), the process ends. When the operator visits the location where the work vehicle 10 stops at the ending point Ev2 to perform the recovery work so that the positioning accuracy is restored to the predetermined accuracy or higher, the vehicle control device 11 determines whether the positioning accuracy is equal to or more than the predetermined accuracy. On the other hand, if the positioning accuracy is not restored to the predetermined accuracy or higher even if the operator visits the location where the work vehicle 10 stops at the ending point Ev2 to perform the recovery work, the vehicle control device 11 ends the automatic traveling process. In this case, the operator moves the work vehicle 10 out of the farm field F through a manual operation to repair the work vehicle 10.

In step S10, the vehicle control device 11 switches the travel mode from the crop row route travel mode M2 to the target route travel mode M1. When switching the travel mode to the target route travel mode M1, the vehicle control device 11 causes the work vehicle 10 to travel in the target route travel mode M1 again. For example, the vehicle control device 11 causes the work vehicle 10 to automatically travel along the target route R, based on the positioning information (RTK positioning information) positioned by the positioning device 16, from the position Pe at which the work vehicle 10 stops.

In step S11, the vehicle control device 11 determines whether the work vehicle 10 ends the work. The vehicle control device 11 determines that the work is ended when the position of the work vehicle 10 matches the work end position G (see FIG. 7). When the work vehicle 10 ends the work (S11: Yes), the automatic traveling process ends. The vehicle control device 11 repeats the processes of steps S4 to S10 until the work vehicle 10 ends the work (S11: No).

If the positioning accuracy is less than a predetermined accuracy within the non-work region (headland region) (S5: No), the vehicle control device 11 performs a recovery operation in step S51. Specifically, the vehicle control device 11 stops the work vehicle 10 in the non-work region (headland region), and accepts the recovery work by the operator at the stop location. The vehicle control device 11 resets the travel mode of the work vehicle 10. After step S51, in step S52, the vehicle control device 11 determines whether the positioning accuracy is equal to or more than a predetermined accuracy. When the positioning accuracy is equal to or more than a predetermined accuracy (S52: Yes), in step S10, the vehicle control device 11 switches the travel mode to the target route travel mode M1. On the other hand, if the positioning accuracy is less than the predetermined accuracy (S52: No), the process ends.

As described above, the automatic traveling system 1 according to the present embodiment causes the work vehicle 10 to travel, in the travel region (for example, the farm field F), in the target route travel mode M1 in which the work vehicle 10 automatically travels according to the previously set target route R, based on the positioning information of the work vehicle 10. Further, if the positioning accuracy of the work vehicle 10 is less than a predetermined accuracy, the automatic traveling system 1 causes the work vehicle 10 to travel by switching the travel mode from the target route travel mode M1 to the crop row route travel mode M2 in which the work vehicle 10 travels according to the position of the work object (crops V) arranged within the travel region. The automatic traveling system 1 causes the work vehicle 10 to travel to the end point of the work object route (crop row route R0) set according to the position of the work object (crops V) in the crop row route travel mode M2.

Further, in the automatic traveling method according to the present embodiment, one or more processors execute causing a work vehicle 10 to travel in the target route travel mode M1 in which the work vehicle 10 performs the automatic travel according to the previously set target route R, based on the positioning information of the work vehicle 10, in a travel region, causing the work vehicle 10 to travel by switching the travel mode from the target route travel mode M1 to the crop row route travel mode M2 in which the work vehicle 10 travels according to the position of the work object (crops V) arranged within the travel region if the positioning accuracy of the work vehicle 10 is less than a predetermined accuracy, and causing the work vehicle 10 to travel to the end point of the work object route (crop row route R0) set according to the position of the work object (crops V) in the crop row route travel mode M2.

According to such a configuration, for example, if the work vehicle 10 stops at a location where sufficient space cannot be secured in a surrounding area while the work vehicle 10 is automatically traveling in the crop row Vr (work route R1), it is possible to move the work vehicle 10 from the stop location to the end point of the crop row Vr. The end point is included in the headland region not arranged with the work object (crops V). This enables the operator to visit the location where the work vehicle 10 stops at the end point to easily perform a recovery work and the like. It is possible for the operator to quickly restore the work vehicle 10 to the automatic travel in the target route travel mode M1.

The present invention is not limited to the embodiments described above. Other embodiments of the present invention will be described below.

In the above-described embodiment, if the positioning accuracy of the work vehicle 10 is less than a predetermined accuracy, the vehicle control device 11 switches the travel mode from the target route travel mode M1 to the crop row route travel mode M2 to cause the work vehicle 10 to automatically travel along the crop row route R0 by utilizing the detection results of the LiDAR sensors 171L and 171R. In such a configuration, for example, if the road surface condition of the farm field F is not desirable or the slope of the farm field F is large, the estimation accuracy of the crop row route R0 may decrease and it may be difficult to precisely reach the end point. Therefore, in another embodiment, an operation by the operator may be intervened in the crop row route travel mode M2.

Specifically, in another embodiment, if the positioning accuracy of the work vehicle 10 is less than a predetermined accuracy, the vehicle control device 11 switches the travel mode from the target route travel mode M1 to the crop row route travel mode M2, and based on the operation by the operator, causes the work vehicle 10 to travel to the end point of the crop row route R0 (work route R1).

Here, the operation by the operator (predetermined operation in the present invention) may include an instruction operation for allowing the work vehicle 10 to automatically travel from the stop location (position Pe) to the end point, and a travel operation for causing the work vehicle 10 to manually travel from the stop location (position Pe) to the end point.

For example, if the positioning accuracy of the work vehicle 10 is less than a predetermined accuracy when the work vehicle 10 is performing the spraying work while automatically traveling along the work route R1 of the crop row Vr, the vehicle control device 11 switches the travel mode from the target route travel mode M1 to the crop row route travel mode M2. The operator selects a permission button for permitting the automatic travel on an operation device such as the operation terminal 20 and a smartphone to apply an automatic travel instruction. When acquiring the automatic travel instruction from the operation terminal 20, the vehicle control device 11 causes the work vehicle 10 to automatically travel from the position Pe to the end point in the crop row route travel mode M2. For example, the operator is capable of visually confirming a surrounding area of the position Pe at which the work vehicle 10 stops and applying such an instruction operation on the operation terminal 20. For example, the operator is capable of applying the instruction operation on the operation terminal 20 at a remote location away from the work vehicle 10.

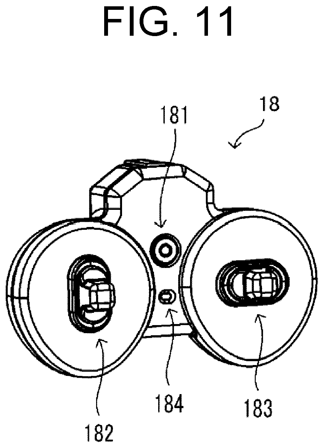

If the positioning accuracy of the work vehicle 10 is less than a predetermined accuracy when the work vehicle 10 is performing the spraying work while automatically traveling along the work route R1 of the crop row Vr, the vehicle control device 11 switches the travel mode from the target route travel mode M1 to the crop row route travel mode M2. The operator operates the manual travel operation unit 18 (see FIG. 4B) provided in the work vehicle 10 to cause the work vehicle 10 to manually travel. FIG. 11 illustrates an outer appearance of the manual travel operation unit 18. The manual travel operation unit 18 includes a power switch 181 that activates a manual travel mode, an operation switch 182 that causes the work vehicle 10 to travel forward and backward, an operation switch 183 that causes the work vehicle 10 to turn right and left, and an LED 184 that turns on when the manual travel mode is activated. The manual travel operation unit 18 is connected to the vehicle control device 11 of the work vehicle 10 via a communication cable (not illustrated). The vehicle control device 11 causes the work vehicle 10 to travel in response to an operation of the manual travel operation unit 18. For example, the operator turns on the power switch 181 of the manual travel operation unit 18 to apply an instruction operation to travel forward by the operation switch 182. The vehicle control device 11 causes the work vehicle 10 to travel forward toward the end point only while receiving the instruction operation to travel forward.

In another embodiment, for example, if the positioning accuracy is restored to the predetermined accuracy or higher while the vehicle control device 11 causes the work vehicle 10 to automatically travel toward the end point of the crop row route R0 in the crop row route travel mode M2, the vehicle control device 11 may switch the travel mode to the target route travel mode M1 to cause the work vehicle 10 to automatically travel. As a result, it is possible to keep a distance over which the work vehicle 10 travels in the crop row route travel mode M2 to a minimum distance.

In another embodiment, the vehicle control device 11 may control a movement direction of the work vehicle 10 according to a location (position Pe) where the positioning accuracy is less than a predetermined accuracy. For example, if the position Pe is closer to the starting point E1 than the ending point E2 of the crop row route R0 (work route R1) (see FIG. 7), the vehicle control device 11 causes the work vehicle 10 to move backward from the position Pe to the starting point E1. As described above, if the vehicle control device 11 causes the work vehicle 10 to travel in the crop row route travel mode M2, the vehicle control device 11 may cause the work vehicle 10 to travel toward the end point closer to the position Pe. As a result, it is possible to keep a distance over which the work vehicle 10 travels in the crop row route travel mode M2 to a minimum distance. The starting point E1 is an example of an end point in the present invention. The starting point E1 is an end point of the work route R1 and is included in a region not arranged with the crops V (for example, a headland region).

### REFERENCE SIGNS LIST

1...Automatic traveling system
10...Work vehicle
11... Vehicle control device
111...Determination processing unit
112...Travel processing unit
113...Switching processing unit
14...Spray device
16...Positioning device
17...Obstacle detection device
18...Manual travel operation unit
20...Operation terminal
211...Setting processing unit
212...Route generation processing unit
213...Output processing unit
40...Base station
50... Satellite
F...Farm field (travel region)
E1 ... Starting point (end point)
E2...Ending point (end point)
R...Target route
R0... Crop row route
V...Crop (work object)
Vr...Crop row
M1...Target route travel mode (first travel mode)
M2...Crop row route travel mode (second travel mode)

## Claims

1. An automatic traveling method comprising:
causing a work vehicle to travel in a first travel mode in which the work vehicle automatically travels according to a target route previously set, based on positioning information of the work vehicle, in a travel region;
switching, if a positioning accuracy of the work vehicle is less than a predetermined accuracy, from the first travel mode to a second travel mode in which the work vehicle travels according to a position of a work object arranged within the travel region to cause the work vehicle to travel; and
causing the work vehicle to travel in the second travel mode to an end point of a work object route set according to the position of the work object.

2. The automatic traveling method according to claim 1, wherein in the second travel mode, the work vehicle is caused to automatically travel to the end point of the work object route according to the position of the work object.

3. The automatic traveling method according to claim 1, wherein in the second travel mode, the work vehicle is caused to travel to the end point of the work object route, based on an operation of a user.

4. The automatic traveling method according to claim 3, wherein in the second travel mode, if a predetermined operation by a user is accepted, the work vehicle is caused to automatically travel to the end point of the work object route according to a position of the work object.

5. The automatic traveling method according to any one of claims 1 to 4, wherein a travel speed of the work vehicle in the second travel mode is set to a speed slower than a travel speed of the work vehicle in the first travel mode.

6. The automatic traveling method according to any one of claims 1 to 5, wherein in the second travel mode, a work on the work object by the work vehicle is stopped.

7. The automatic traveling method according to any one of claims 1 to 6, wherein a position of the work vehicle at the time of switching from the first travel mode to the second travel mode on the work object route is recorded.

8. The automatic traveling method according to any one of claims 1 to 7, wherein the end point of the work object route is included in a region not arranged with the work object or a headland region.

9. The automatic traveling method according to any one of claims 1 to 8, wherein the work vehicle is a vehicle capable of performing a spraying work for spraying a spraying material to a first work object and a second work object arranged in each of left and right directions of the first work object while traveling across the first work obj ect.

10. An automatic traveling system, comprising:
a travel processing unit that causes a work vehicle to travel in a first travel mode in which the work vehicle automatically travels according to a target route previously set, based on positioning information of the work vehicle, in a travel region; and
a switching processing unit that switches, if a positioning accuracy of the work vehicle is less than a predetermined accuracy, from the first travel mode to a second travel mode in which the work vehicle travels according to a position of a work object arranged within the travel region, wherein
the travel processing unit causes the work vehicle to travel in the second travel mode to an end point of a work object route set according to the position of the work obj ect.

11. An automatic traveling program causing one or more processors to execute:
causing a work vehicle to travel in a first travel mode in which the work vehicle automatically travels according to a target route previously set, based on positioning information of the work vehicle, in a travel region;
switching, if a positioning accuracy of the work vehicle is less than a predetermined accuracy, from the first travel mode to a second travel mode in which the work vehicle travels according to a position of a work object arranged within the travel region to cause the work vehicle to travel; and
causing the work vehicle to travel in the second travel mode to an end point of a work object route set according to the position of the work object.
